# FASCICULE DE BREVET EUROPEEN

(11) **EP 2 558 324 B1**
(45) Date de publication et mention de la délivrance du brevet: **06.03.2019**
(21) Numéro de dépôt: 11730362.8
(22) Date de dépôt: 11.04.2011
(51) Int. Cl.: B60K 23/08

(54) **PROCEDE DE COMMANDE D'UN MOYEN DE COUPLAGE MECANIQUE DES ESSIEUX D'UN SYSTEME DE TRANSMISSION D'UN VEHICULE AUTOMOBILE**
VERFAHREN ZUR STEUERUNG EINES MITTELS ZUR MECHANISCHEN KOPPLUNG DER ACHSE EINES GETRIEBESYSTEMS EINES MOTORFAHRZEUGS
METHOD FOR CONTROLLING A MEANS FOR MECHANICALLY COUPLING THE AXLES OF A TRANSMISSION SYSTEM OF A MOTOR VEHICLE

(30) Priorité: 12.04.2010 FR 1052781
(43) Date de publication de la demande: 20.02.2013
(73) Titulaire: Renault S.A.S., 92100 Boulogne-Billancourt (FR)
(72) Inventeur: FOUSSARD, François, 78000 Versailles (FR); GUEGAN, Stéphane, F-78000 Versailles (FR); ROMANI, Nicolas, F-75016 Paris (FR); SAINT LOUP, Philippe, F-78760 Jouars Pontchartrain (FR)
(86) Numéro de dépôt international: PCT/FR2011/050823
(87) Numéro de publication internationale: WO 2011/128566

(56) Documents cités:
- US-A1- 2009 127 014

## Description

La présente invention concerne un procédé de fonctionnement d'un système de transmission du type à quatre roues motrices d'un véhicule automobile et un procédé de commande d'un moyen de couplage mécanique d'un premier essieu à un deuxième essieu d'un système de transmission du type quatre roues motrices d'un véhicule automobile. L'invention porte également sur un système de commande de l'état du moyen de couplage mécanique. Elle porte aussi sur un système de transmission comportant un tel système de commande. Elle porte encore sur un véhicule comprenant un tel système de commande ou un tel système de transmission.

L'invention s'applique à un véhicule équipé d'un système quatre roues motrices pilotées. L'objectif de ce type de véhicule est d'améliorer les prestations telles que le comportement et la motricité, notamment en décollage, c'est-à-dire lors de la mise en mouvement du véhicule et en franchissement.

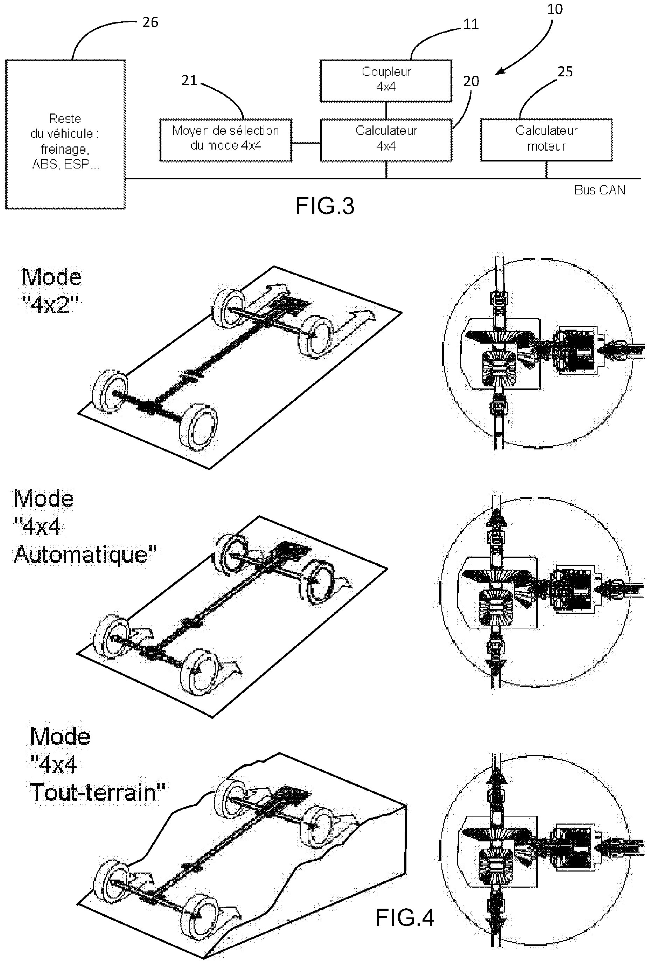

On connaît un système de transmission du type quatre roues motrices dans lequel un moyen de couplage mécanique à commande électromagnétique d'un essieu avant à un essieu arrière (coupleur) peut fonctionner selon trois états définissant trois modes de fonctionnement du système de transmission comme représenté à la figure 4.
- un premier mode de transmission où une partie (variable) seulement de la capacité maximale de couple issue d'une source de couple (le moteur du véhicule automobile) et destinée au train arrière est effectivement transmise au train arrière ; ce premier mode dénommé mode « 4*4 Automatique » correspondant à un coupleur dit « piloté », c'est-à-dire qu'un système de commande du coupleur gère automatiquement son fonctionnement, en particulier la quantité de couple transmise ou transmissible,
- un deuxième mode de transmission où la totalité de la capacité maximale de couple issu de la source de couple et destinée au train arrière est effectivement transmise au train arrière ; ce deuxième mode dénommé mode « 4*4 Tout Terrain » correspondant à un coupleur dit « fermé », c'est-à-dire qu'il est verrouillé dans un état définissant une valeur fixe de couple maximal transmissible, le verrouillage étant de préférence électrique,
- un troisième mode de transmission où aucun couple (ou un couple négligeable) issu de la source de couple n'est transmis au train arrière ; ce troisième mode dénommé mode « 4*2 » correspondant à un coupleur dit « ouvert », c'est-à-dire que le coupleur est désactivé ou qu'il ne transmet qu'une quantité négligeable de couple.

Le moyen de couplage permettant de répartir les efforts longitudinaux sur les quatre roues a une capacité maximale de transmission.

On connaît du document JP61275028 une stratégie qui compense la différence de rayon de roues au niveau du calcul du glissement avant-arrière si une différence de rayon de roulement est détectée.

On connaît du document US5752211 une stratégie qui améliore la consommation de carburant en calculant un décalage qui est une fonction cubique de la vitesse et qui est soustraite à la commande de distribution de couple classique. Ainsi, le glissement est amélioré lors des phases de roulage quasi-statiques.

On connaît du document EP 1 188 597 A7 une adaptation de la stratégie de répartition de couple entre les trains avant et arrière en fonction d'une détection de variation de diamètre des pneus due à une usure ou un changement.

On connaît du document EP 1 275 549 A2 une stratégie de répartition de couple entre les trains avant et arrière en fonction de différents signaux tels que les vitesses roues, le régime moteur et la position pédale d'accélérateur. On connaît du document JP10119598 un véhicule à quatre roues motrices dont les deux roues motrices principales sont les roues arrière (base propulsion). Lorsque les roues arrière se mettent à patiner, le système de contrôle de traction réduit la puissance motrice appliquée à ces roues arrière et ensuite augmente la puissance motrice sur les roues avant (roues motrices secondaires) grâce à un système de contrôle de répartition de couple.

On connaît du document JP2004338456 une stratégie évoluée de compensation du glissement.

On connaît du document US6397139 une stratégie qui améliore le transfert de couple en comparant le glissement (calculé sur une période donnée) à une table de valeurs prédéfinies (fonctions de la vitesse du véhicule). Si un grand nombre d'échantillons sont trop éloignés de la valeur donnée par la table, alors le glissement est corrigé.

Le document US2009/127014 A1 divulgue le préambule de la revendication 1.

Le but de l'invention est de fournir un procédé de commande d'un moyen de couplage mécanique d'essieux permettant de remédier aux problèmes évoqués précédemment et améliorant les procédés de commande connus de l'art antérieur. En particulier, l'invention propose un procédé de commande du moyen de couplage permettant d'améliorer les performances de motricité et de décollage (mise en mouvement) d'un véhicule automobile du type à quatre roues motrices.

Le procédé selon l'invention commande un moyen de couplage mécanique des premier et deuxième essieux d'un système de transmission d'un véhicule selon l'intitulé de la revendication 1. Le premier essieu est entraîné par défaut et le deuxième essieu est entraîné optionnellement selon l'état du moyen de couplage. Le procédé comprend une étape de régulation, notamment une régulation du type proportionnel-intégral, du glissement entre le premier et deuxième essieux, la régulation étant mise en oeuvre en commandant une modification de la valeur de couple mécanique transmissible par le coupleur.

On peut utiliser au moins l'un des signaux suivants pour déterminer la consigne de glissement :
- un signal de démarrage du moteur,
- un signal de rayon de braquage ou d'angle du volant de direction ou d'accélération latérale,
- un signal d'écart de rayons des roues,
- un signal de vitesse de rotation des roues,
- un signal de vitesse du véhicule,
- un signal de régime du moteur,
- un signal de couple du moteur,
- un signal de position de la pédale d'accélérateur,
- un signal de position du moyen de commande de sélection du mode de transmission,
- un signal de niveau de couple appliqué au coupleur,
- un signal d'état thermique du coupleur,
- un signal logique d'activation de la pédale de frein ou du levier de frein de parking,
- un signal logique de régulation ABS, ESP.

On peut réinitialiser à une valeur donnée, notamment à zéro, la valeur de couple transmissible lorsque :
- le couple transmissible précédent est nul, ou
- le véhicule est en phase de freinage ou d'accélération, ou
- le système de transmission passe ou est dans un mode de transmission à deux roues motrices.

On peut générer des limites inférieures et/ou supérieures du couple transmissible par le coupleur et on peut saturer le signal de commande de couple transmissible par le coupleur avec cette limite ou ces limites.

On peut enregistrer dans une mémoire une valeur de glissement permanent mesuré ou estimé lors d'une première phase de roulage du véhicule et on peut utiliser cette valeur de glissement dans une autre phase de roulage du véhicule postérieure à la première phase de roulage du véhicule.

Le procédé selon l'invention régit le fonctionnement d'un système de transmission d'un véhicule automobile. Le système comprend un premier essieu entraîné par défaut et un deuxième essieu entraîné optionnellement selon l'état d'un moyen de couplage mécanique des premier et deuxième essieux. Le procédé comprend une phase de mise en oeuvre du procédé de commande défini précédemment.

L'invention porte aussi sur un support d'enregistrement de données lisible par un calculateur sur lequel est enregistré un programme informatique comprenant des moyens de codes de programme informatique de mise en oeuvre des étapes du procédé défini précédemment.

Selon l'invention, le système commande l'état d'un moyen de couplage mécanique des premier et deuxième essieux d'un système de transmission d'un véhicule automobile, le premier essieu étant entraîné par défaut et le deuxième essieu étant entraîné optionnellement selon l'état du moyen de couplage. Le système de commande comprend des moyens matériels et/ou logiciels de mise en oeuvre du procédé défini précédemment.

Le véhicule automobile selon l'invention comprend un système de commande défini précédemment.

L'invention porte aussi sur un programme informatique comprenant un moyen de code de programme informatique adapté à la réalisation des étapes du procédé défini précédemment, lorsque le programme tourne sur un ordinateur.

Le dessin annexé représente, à titre d'exemple, un mode d'exécution d'un procédé de commande selon l'invention et un mode de réalisation d'un système de commande selon l'invention.
Les figures 1 et 3 sont des schémas d'un mode de réalisation d'un véhicule automobile comprenant un système de commande selon l'invention.
La figure 2 est un schéma d'une architecture électronique régissant le fonctionnement d'un système de commande selon l'invention et permettant de mettre en oeuvre le procédé de commande selon l'invention.
La figure 4 est une illustration de différents modes de transmission selon lesquels le système de transmission est susceptible de fonctionner.
La figure 5 est un schéma d'une architecture logicielle régissant le fonctionnement d'un système de commande selon l'invention et permettant de mettre en oeuvre le procédé de commande selon l'invention.
La figure 6 est un schéma d'une mode de réalisation d'un régulateur de glissement d'un système de commande selon l'invention.
La figure 7 est un schéma d'une mode de réalisation d'un premier module de ce régulateur de glissement.
La figure 8 est un schéma d'une mode de réalisation d'un deuxième module de ce régulateur de glissement.
La figure 9 est un mode de réalisation d'une logique permettant de calculer une consigne de glissement.
La figure 10 est un mode de réalisation d'une logique permettant de calculer les vitesses et le glissement.

Le procédé de commande de coupleur selon l'invention permet d'optimiser les performances d'un véhicule équipé d'un système « 4 roues motrices » piloté, en fonction des conditions de roulage, de l'état véhicule et de la volonté du conducteur.

Ce procédé de commande peut être mis en oeuvre dans un système global dont l'architecture matérielle comprend au moins une source de couple de traction (moteur d'entraînement), un moyen de couplage mécanique permettant de répartir des efforts d'entraînement sur les quatre roues du véhicule et des moyens de détermination de variables d'état du véhicule, tels que par exemple des moyens d'obtenir la vitesse de rotation de chaque roue, des moyens d'obtenir les informations relatives au moteur (position de la pédale d'accélération, régime et couple du moteur...), et un ou plusieurs moyens électroniques ou automatiques de calcul.

L'invention est applicable aussi bien à un véhicule à base « traction », c'est-à-dire où le train avant est entraîné par défaut, qu'à un véhicule à base « propulsion », c'est-à-dire où le train arrière est entraîné par défaut.

Le glissement est défini comme la différence de vitesse de rotation entre les essieux avant et arrière. On utilise ce glissement pour optimiser les performances en motricité du véhicule (en mode « 4x4 automatique » ou « 4x4 tout-terrain »). Pour ce faire, on cherche à réguler le glissement entre les essieux en répartissant au mieux le couple d'entraînement fourni par le moteur. Une problématique technique se rapporte à la logique d'utilisation de ce glissement.

La régulation du glissement avant-arrière est une problématique importante pour un véhicule équipé d'un système « 4 roues motrices » piloté. En effet, le glissement ramené au niveau du coupleur limite le couple transféré à l'essieu arrière d'une part, et peut provoquer réchauffement et/ou l'usure du coupleur en fonction du niveau de couple transféré (niveau de fermeture du coupleur) d'autre part.

Le procédé de commande permet d'exploiter au mieux les possibilités offertes par la technologie de coupleur piloté : en calculant en continu une consigne de glissement optimale entre les essieux : en intégrant les différents paramètres et variables ayant une influence, il est possible de commander le coupleur électroniquement.

Dans le cas d'un véhicule muni de peu de capteurs, ne présentant par exemple pas de capteur de température et de capteur de couple au niveau du coupleur, l'estimation et la surveillance du glissement devient le moyen de protéger le coupleur et d'optimiser son fonctionnement et celui du système de transmission. Dans cette perspective, le procédé de commande selon l'invention tient compte des informations disponibles : volonté du conducteur, conditions de roulage, état du coupleur...

Selon le procédé de commande selon l'invention, le calcul de la consigne de glissement prend en compte :
- la vitesse du véhicule et/ou
- le glissement permanent lié à une différence de rayon de roulement et/ou
- le rayon de braquage ou l'angle du volant de direction ou l'accélération transversale et/ou
- la température du coupleur et/ou
- le mode de transmission sélectionné par le conducteur et/ou
- les actions du conducteur (accélération, freinage...).

Par rapport à l'invention FR 09-51101, la présente invention porte sur l'intégration de la compensation par le glissement permanent (lié à une différence de rayon de roulement) et sur la prise en compte de la volonté et des actions du conducteur.

Même si la plage de glissement permanent considérée ne remet pas en cause l'endurance du coupleur, il est important de l'intégrer dans les différentes stratégies de contrôle du système de transmission 4x4, afin d'optimiser les prestations (motricité, comportement sur-vireur/sous-vireur, etc...) en mode « 4x4 automatique » comme en mode « 4x4 tout-terrain » (si le couple de limite fixe transféré dans ce cas ne suffit pas à annuler le glissement).

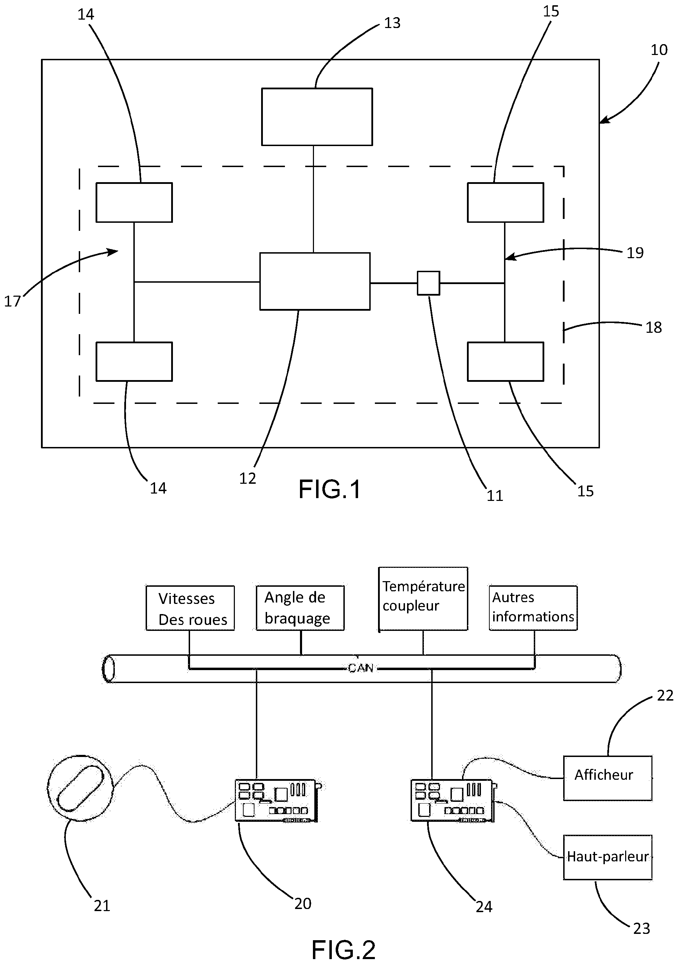

Un mode de réalisation de véhicule automobile 10 selon l'invention représenté aux figures 1 et 2 comprend un mode de réalisation d'un système de transmission 18 du type à quatre roues motrices 14, 15, et en particulier du type à quatre roues motrices pilotées.

Le système de transmission 18 comprend principalement un premier essieu 17 de roues du véhicule automobile, par exemple un essieu avant, un deuxième essieu 19 de roues du véhicule automobile, par exemple un essieu arrière, un moyen 11 mécanique de couplage, par exemple à commande électromagnétique, des premier et deuxième essieux (coupleur) et un système de commande de l'état du moyen mécanique de couplage. Le système de commande comprend un moyen 21, notamment un bouton, de commande de sélection du mode de fonctionnement du système de transmission et un calculateur 20.

Le système de transmission est connecté à une source 13 de couple d'entraînement du véhicule automobile (un moteur d'entraînement du véhicule).

Bien que n'étant pas tous représentés, le système de transmission comprend un moyen de sélection par l'utilisateur (au tableau de bord) du mode de fonctionnement du système, un moyen de détection, à partir des variables d'état du véhicule et/ou du système de transmission, de la volonté du conducteur et des conditions de roulage (accélération, freinage, glissement...), un moyen de commande pour commuter le coupleur dans un mode ou état déterminé en fonction du mode sélectionné par le conducteur, de la volonté du conducteur et des conditions de roulage du véhicule, des moyens de détermination de variables d'état du véhicule, tels que par exemple des moyens d'obtenir la vitesse de rotation de chaque roue, des moyens d'obtenir la vitesse longitudinale du véhicule, des moyens d'obtenir la vitesse de rotation de l'arbre de sortie du moteur d'entraînement, des moyens d'obtenir la température du coupleur, des moyens d'obtenir des informations d'état de différents équipements du véhicule et des moyens électroniques ou automatiques de calcul. Le système de transmission comporte un moyen de sélection par l'utilisateur (par exemple au tableau de bord) d'un mode de fonctionnement du système, notamment un premier mode « 4*4 Automatique », un deuxième mode « 4*4 Tout Terrain » ou un troisième mode « 4*2 », un moyen de détection, à partir des variables d'état du véhicule et/ou du système, de la volonté du conducteur et des conditions de roulage (accélération, freinage, glissement...) et un moyen de commande pour commuter le système dans un mode déterminé en fonction du mode sélectionné par le conducteur, de la volonté conducteur et des conditions de roulage du véhicule. Le système de transmission, en particulier le système de commande du moyen mécanique de couplage comprend également une mémoire et tous les moyens matériels et/ou logiciels permettant de mettre en oeuvre le procédé objet de l'invention. Notamment, les systèmes, en particulier le calculateur, peuvent comprendre un programme informatique comprenant un moyen de code de programme informatique adapté à la réalisation des étapes du procédé objet de l'invention.

Dans le système de transmission, le premier essieu (par exemple l'essieu avant, respectivement l'essieu arrière) est entraîné par défaut par la source de couple. Par contre, le deuxième essieu (par exemple l'essieu arrière, respectivement l'essieu avant) n'est entraîné qu'optionnellement selon l'état du coupleur.

À ce propos, selon l'état du coupleur, le système de transmission présente les trois modes de fonctionnement suivants:
- un premier mode de transmission où une partie (variable) seulement de la capacité maximale de couple issu de la source de couple et destinée au deuxième essieu est effectivement transmise au deuxième essieu ; ce premier mode dénommé mode « 4*4 Automatique » correspondant à un coupleur dit « piloté », c'est-à-dire que le système de commande du coupleur gère automatiquement son fonctionnement, en particulier la quantité de couple transmise ou transmissible,
- un deuxième mode de transmission où la totalité de la capacité maximale de couple issu de la source de couple et destinée au deuxième essieu est effectivement transmise au deuxième essieu ; ce deuxième mode dénommé mode « 4*4 Tout Terrain » correspondant à un coupleur dit « fermé », c'est-à-dire qu'il est verrouillé dans un état définissant une valeur fixe de couple maximal transmissible,
- un troisième mode de transmission où aucun couple ou seulement un couple négligeable issu de la source de couple est transmis au deuxième essieu ; ce troisième mode dénommé mode « 4*2 » correspondant à un coupleur dit « ouvert », c'est-à-dire que le coupleur est désactivé ou qu'il ne transmet qu'une quantité négligeable de couple.

Sur le plan technologique, le coupleur peut être du type à friction, c'est-à-dire qu'il comporte des disques de friction destinés à venir en contact les uns avec les autres pour transmettre le couple et un moyen actionneur pour écarter ou amener ces disques en contact les uns avec les autres. Le coupleur peut aussi être du type à fluide visqueux (viscocoupleur), c'est-à-dire qu'il comporte des roues à aubes baignant dans un fluide et un moyen actionneur pour écarter ou rapprocher ces roues. Dans l'un comme dans l'autre des cas, le moyen actionneur est piloté par le calculateur 20. Le coupleur peut en particulier être un embrayage multi-disques piloté en courant.

Le système de transmission peut également comprendre un calculateur 24 et des moyens 22, 23 permettant d'émettre des informations à l'attention du conducteur, notamment un afficheur 22 et/ou un haut-parleur 23.

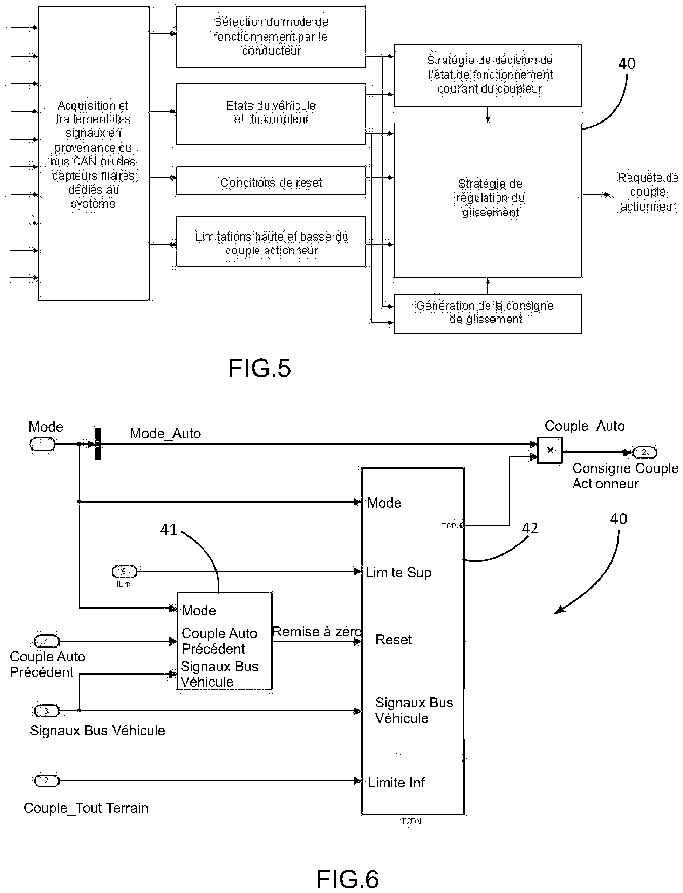

Le procédé de commande selon l'invention peut être mis en oeuvre au sein d'une architecture logicielle comprenant les différents modules représentés à la figure 5. Cette architecture peut s'intégrer à la structure globale de commande du véhicule 4x4. Elle permet également une grande flexibilité lors de la conception et du paramétrage puisqu'elle peut être fonction simultanément de différentes conditions de roulage (vitesse du véhicule, couple transmis au sol, position de la pédale d'accélération, actions de freinage...).

Dans un mode de réalisation du système de commande selon l'invention, dans le calculateur 20, un module 40 (représenté à la figure 6) permet de déterminer la valeur de couple qui doit être transférée au niveau du coupleur et donc la commande à appliquer au coupleur pour tendre vers la consigne de glissement déterminée. Pour ce faire, on génère en sortie du module 40 un signal sortie Tc de commande de couple transmissible par le coupleur.

Dans le procédé de commande, un glissement permanent détecté et estimé est mémorisé dans le calculateur entre deux phases de roulage s'il n'a pas déclenché l'ouverture du coupleur, et peut donc être utilisé d'une phase de roulage à l'autre. Pour ce faire, on calcule en continu le glissement (différence des vitesses moyennes) entre les essieux et on le compare à la consigne de glissement, qui est elle-même ajustée en fonction de différents paramètres et variables.

Les signaux utilisés en entrée du module 40 représenté à la figure 6 peuvent provenir directement de capteurs par connexion filaire ou d'autres calculateurs via un bus de communication (de type CAN par exemple). Ils peuvent comprendre tout ou partie des signaux suivants :
- des signaux de vitesses de rotation des roues
- un signal de vitesse du véhicule,
- un signal de régime du moteur,
- un signal de couple du moteur,
- un signal de position de la pédale d'accélérateur,
- un signal « Mode » de position du moyen de commande de sélection du mode de transmission,
- un signal de niveau de couple appliqué au coupleur,
- un signal d'état thermique du coupleur,
- des signaux logiques d'activation de la pédale de frein ou du levier de frein de parking,
- des signaux logiques de régulation ABS, ESP...

Ces signaux peuvent aussi être estimés, filtrés et/ou prétraités pour améliorer la robustesse du procédé.

En détail, un mode d'exécution du procédé de commande comprend une régulation du glissement à l'aide d'une commande de couple transmissible. Par exemple, le mode d'exécution comprend tout ou partie des étapes suivantes :
1. calcul et filtrage des vitesses et glissements.
2. génération d'un signal de remise à zéro de la consigne de couple transmissible par le coupleur, les conditions de remise à zéro incluant notamment des conditions de roulage,
3. détection du mode de transmission,
4. génération de limites inférieures et/ou supérieures du couple transmissible par le coupleur,
5. génération de la consigne de glissement,
6. régulation du glissement,

Dans l'étape 1 ci-dessus, on calcule et on filtre :
- les vitesses « VitesseVéhiculeBrute » et « VitesseEssieuAvant »
- les glissements « GlissementBrut » et « GlissementCorrigé ».

Le signal « GlissementPermanentMémorisé » (mémorisé entre deux missions successives) est utlisé pour calculer le « GlissementCorrigé » en fonction de la « VitesseVéhiculeBrute ».

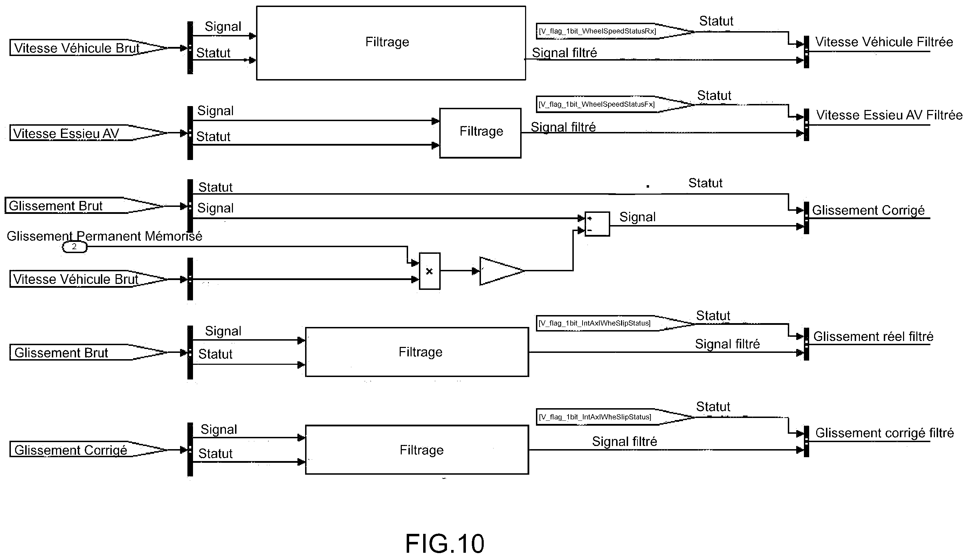

Un mode de réalisation d'une telle logique est représenté à la figure 10.

Dans l'étape 2, on génère un signal de la consigne de couple transmissible par le coupleur. Pour ce faire, on met à zéro le signal de sortie commandant le couple transmissible par le coupleur si :
- le couple transmissible précédent « CoupleAutoPrécédent » est nul, ou
- le véhicule est en phase de freinage ou d'accélération (test des signaux « Freinage » et « Acceleration_OF_ToutTerrain » et « Acceleration_OF_Auto »), ou
- le système de transmission passe ou est en mode « 4x2 » (test du signal « Mode ».

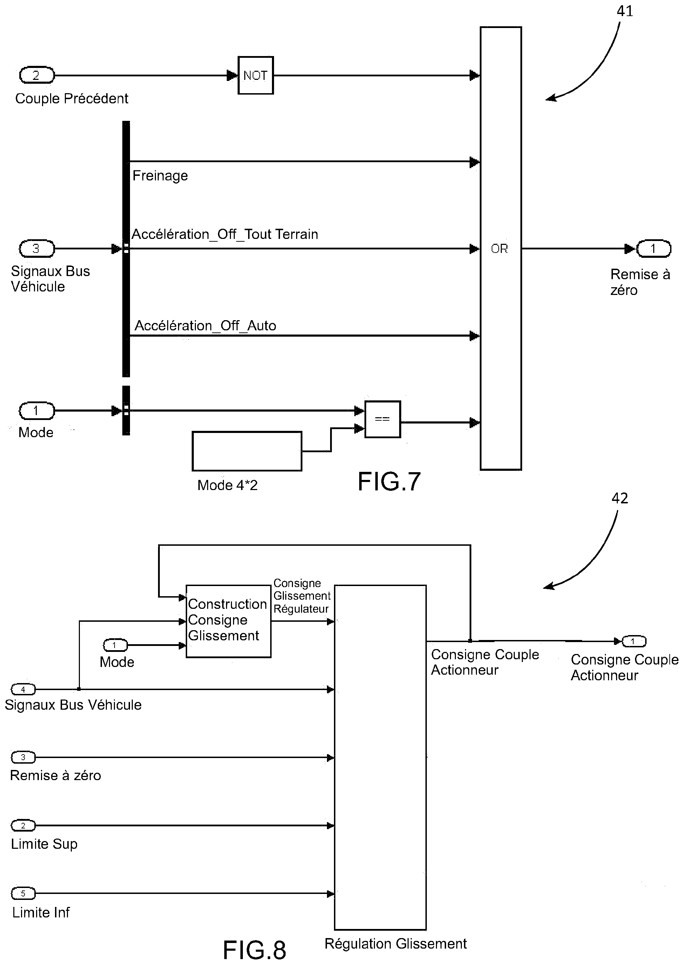

Un mode réalisation d'un bloc logique 41 permettant l'exécution d'une telle étape est représenté à la figure 7.

Dans l'étape 3, on détecte le mode de transmission courant. Ainsi, on teste le mode de transmission 4x4 sélectionné (4*4 automatique ou 4*4 tout-terrain) en testant si le signal « Mode_Auto » est égal à 1. Une telle logique est représentée à la figure 6.

Dans l'étape 4, on génère des signaux de limitation (haute et basse) du couple transmissible par le coupleur. Cette logique de limitation est mise en oeuvre dans le bloc logique 42 des figures 6 et 8. Suivant le mode de transmission actif (automatique ou tout-terrain), on sature le signal de commande de couple transmissible par le coupleur (« LimiteSup » et « Limitelnf »).

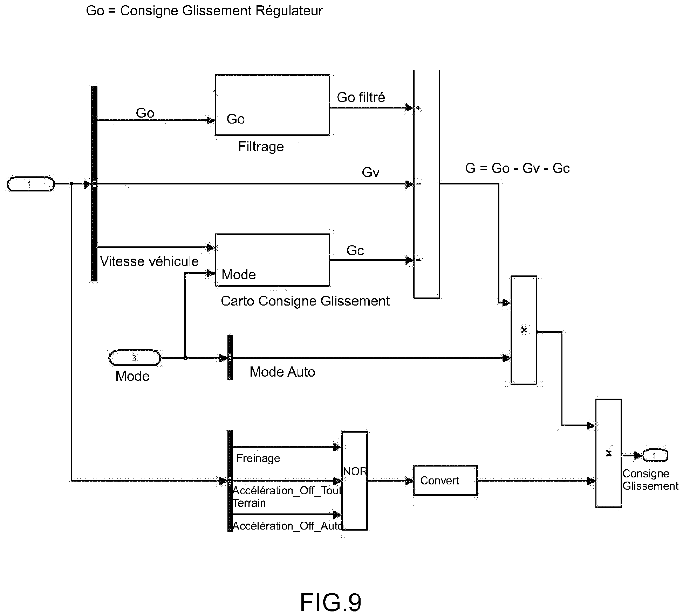

Dans l'étape 5, on génère un signal de consigne de glissement. Un mode de réalisation d'une telle logique est représenté à la figure 9. La consigne de glissement « ConsigneGlissement » est égale à :
- un glissement « G0 » (ou « GlissementCorrigé » de la figue 10) mesuré et corrigé par le glissement permanent engendré par une différence de rayon de roulement,
   auquel on retranche :
- un glissement « Gv » corrigé par le glissement engendré par le rayon de braquage,
- et un glissement issu de deux cartographies (une pour chaque mode de fonctionnement 4x4 « ToutTerrain » et « Automatique ») en fonction de la vitesse véhicule.

La consigne de glissement peut aussi être adaptée en fonction de la température du coupleur.

Dans l'étape 6, on régule le glissement en agissant sur la commande de couple transmissible par le coupleur. Le régulateur peut être une structure du type proportionnel intégral avec des gains proportionnel Kp et intégral Ki paramétrables. Dans ce cas, l'action intégrale du régulateur, et donc la sortie générant le signal de commande, peut être saturée par les signaux de limitation (haute et basse) du couple transmissible par le coupleur évoqués précédemment.

Ainsi, le procédé de commande selon l'invention permet :
- d'une part, d'optimiser le calcul de la consigne de glissement pour la régulation,
- d'autre part, de protéger le coupleur en cas de glissement non maîtrisé (glissement permanent, patinage...).

Ainsi, le procédé de commande permet d'optimiser les performances (motricité) mais aussi d'améliorer la durabilité du coupleur - et donc de la prestation - et de garantir la sécurité globale du véhicule. En effet, quelle que soit la situation de conduite, la consigne de glissement est optimisée.

Le procédé de commande présente encore les avantages suivants :
- il présente une stratégie de filtrage de la consigne qui donne un degré de liberté supplémentaire à la mise au point de la dynamique de l'asservissement sans dégrader sa robustesse car elle permet d'éviter le gain de boucle,
- il permet de protéger l'actionneur en cas de glissement anormal et permanent lié à une différence de rayon de roue pour un véhicule équipé d'un système « 4 roues motrices » piloté,
- il permet de préserver la prestation 4x4 en alertant d'un glissement anormal et permanent,
- il permet de détecter les conditions de conduite adéquates (détection accélération/freinage/vitesse stabilisée) pour calculer un glissement dit « permanent »,
- il permet d'estimer un glissement dit « permanent » et de corriger le calcul du glissement entre les essieux avant et arrière,
- il permet d'optimiser les performances de motricité 4x4 en contrôlant finement le glissement engendré par du patinage (et non par une différence de rayons roues),
- il permet de réutiliser le glissement permanent estimé en fin de phase de roulage précédente dès le début d'une phase de roulage suivante,
- il permet de s'affranchir du glissement généré en virage,
- il permet de s'affranchir du glissement généré par la charge « moteur » sur l'essieu entraîné,
- il s'applique quel que soit le mode de fonctionnement piloté (4x4 automatique ou 4x4 tout-terrain) demandé par le conducteur,
- il peut s'appliquer à n'importe quelle définition technique de système de freinage (avec/sans ABS, avec/sans ESP).

## Revendications

1. Procédé de commande d'un moyen (11) de couplage mécanique des premier (17) et deuxième (19) essieux d'un système de transmission (18) d'un véhicule automobile (10), le premier essieu étant entraîné par défaut et le deuxième essieu étant entraîné optionnellement selon l'état du moyen de couplage, **caractérisé en ce qu'**il comprend
- une étape de calcul du glissement en continu,
- une étape de calcul en continu de la consigne de glissement entre le premier et le deuxième essieu, ladite consigne de glissement est égale à:∘ un glissement (G0) mesuré et corrigé par le glissement permanent engendré par une différence de rayon de roulement, auquel on retranche :
∘ un glissement (GV) corrigé par le glissement engendré par le rayon de braquage,
∘ et d'un glissement issu de deux cartographies correspondant au mode de fonctionnement 4x4 Tout Terrain et au mode de fonctionnement Automatique du véhicule en fonction de la vitesse véhicule.
- une étape de régulation, notamment une régulation du type proportionnel-intégral, du glissement entre le premier et deuxième essieux à la valeur de consigne, la régulation étant mise en oeuvre en commandant une modification de la valeur de couple mécanique (Tc) transmissible par le coupleur selon la différence entre le glissement calculé et la consigne de glissement.

2. Procédé de commande selon la revendication 1, **caractérisé en ce qu'**on utilise au moins l'un des signaux suivants pour déterminer la consigne de glissement :
- un signal de démarrage du moteur,
- un signal de rayon de braquage ou d'angle du volant de direction ou d'accélération latérale,
- un signal de vitesse de rotation des roues,
- un signal de vitesse du véhicule,
- un signal de régime du moteur,
- un signal de couple du moteur,
- un signal de position de la pédale d'accélérateur,
- un signal de niveau de couple appliqué au coupleur,
- un signal d'état thermique du coupleur,
- un signal logique d'activation de la pédale de frein ou du levier de frein de parking,
- un signal logique de régulation ABS, ESP.

3. Procédé de commande selon l'une des revendications précédentes, **caractérisé en ce qu'**on réinitialise à une valeur donnée, notamment à zéro, la valeur de couple transmissible lorsque :
- le couple transmissible précédent (TcPrev) est nul, ou
- le véhicule est en phase de freinage ou d'accélération, ou
- le système de transmission passe ou est dans un mode de transmission à deux roues motrices.

4. Procédé de commande selon l'une des revendications précédentes, **caractérisé en ce qu'**on génère des limites inférieures et/ou supérieures du couple transmissible par le coupleur et **en ce qu'**on sature le signal de commande de couple transmissible par le coupleur avec cette limite ou ces limites.

5. Procédé de commande selon l'une des revendications précédentes, **caractérisé en ce qu'**on enregistre dans une mémoire une valeur de glissement permanent mesuré ou estimé lors d'une première phase de roulage du véhicule et **en ce qu'**on utilise cette valeur de glissement dans une autre phase de roulage du véhicule postérieure à la première phase de roulage du véhicule.

6. Procédé de fonctionnement d'un système de transmission (18) d'un véhicule automobile, le système comprenant un premier essieu (17) entraîné par défaut et un deuxième essieu (19) entraîné optionnellement selon l'état d'un moyen (11) de couplage mécanique des premier et deuxième essieux, **caractérisé en ce qu'**il comprend une phase de mise en oeuvre du procédé de commande selon l'une des revendications précédentes.

7. Support d'enregistrement de données lisible par un calculateur sur lequel est enregistré un programme informatique comprenant des moyens de codes de programme informatique de mise en oeuvre des étapes du procédé selon l'une des revendications précédentes.

8. Système (12) de commande de l'état d'un moyen (11) de couplage mécanique des premier (17) et deuxième (19) essieux d'un système de transmission (18) d'un véhicule automobile (10), le premier essieu étant entraîné par défaut et le deuxième essieu étant entraîné optionnellement selon l'état du moyen de couplage, **caractérisé en ce qu'**il comprend des moyens matériels et/ou logiciels de mise en oeuvre du procédé selon l'une des revendications 1 à 6.

9. Véhicule automobile (10) comprenant un système (12) de commande selon la revendication 8.

10. Programme informatique comprenant un moyen de code de programme informatique adapté à la réalisation des étapes du procédé selon l'une des revendications 1 à 6, lorsque le programme tourne sur un ordinateur.

## Patentansprüche

1. Verfahren zum Steuern eines Mittels (11) zum mechanischen Koppeln der ersten (17) und der zweiten (19) Achse eines Getriebesystems (18) eines Kraftfahrzeugs (10), wobei die erste Achse standardmäßig angetrieben wird und wobei die zweite Achse optional je nach Zustand des Mittels zum Koppeln angetrieben wird, **dadurch gekennzeichnet, dass** es aufweist
- einen Schritt des Berechnens des Dauerschlupfs,
- einen Schritt des fortlaufenden Berechnens des Sollschlupfs zwischen der ersten und der zweiten Achse, wobei der Sollschlupf gleich ist:
∘ einem Schlupf (G0), der durch den Permanentschlupf gemessen und korrigiert wird, der durch eine Differenz des Rollradius erzeugt wird, von dem subtrahiert wird:
∘ ein Schlupf (GV), der durch den Schlupf korrigiert wird, der durch den Wenderadius erzeugt wird,
∘ und ein Schlupf, der aus zwei Korrekturkennfeldern hervorgeht, die dem Allradantrieb-Geländebetriebsmodus und dem Automatikbetriebsmodus des Fahrzeugs abhängig von der Fahrzeuggeschwindigkeit entsprechen,
- einen Schritt des Regelns, insbesondere ein Regeln vom Typ des Proportional-Integral-Regelns, des Schlupfs zwischen der ersten und der zweiten Achse auf den Sollwert, wobei das Regeln durch Steuern einer Änderung des Wertes des mechanischen Drehmoments (Tc), das durch die Kupplung übertragbar ist, entsprechend der Differenz zwischen dem berechneten Schlupf und dem Sollschlupf umgesetzt wird.

2. Verfahren zum Steuern nach Anspruch 1, **dadurch gekennzeichnet, dass** mindestens eines der folgenden Signale verwendet wird, um den Sollschlupf zu bestimmen:
- ein Startsignal des Motors,
- ein Signal des Lenkradius oder des Lenkwinkels vom Lenkrad oder der Querbeschleunigung,
- ein Signal der Drehzahl der Räder,
- ein Signal der Geschwindigkeit des Fahrzeugs,
- ein Signal der Motordrehzahl,
- ein Signal des Motordrehmoments,
- ein Signal der Position des Gaspedals,
- ein Signal des Drehmomentniveaus, das auf die Kupplung aufgebracht wird,
- ein Signal des Wärmezustands der Kupplung,
- ein logisches Signal der Betätigung des Bremspedals oder des Feststellbremshebels,
- ein logisches Signal der ABS-, ESP-Regelung.

3. Verfahren zum Steuern nach einem der vorhergehenden Ansprüche, **dadurch gekennzeichnet, dass** bei einem bestimmten Wert, insbesondere bei Null, der Wert des übertragbaren Drehmoments zurückgesetzt wird, wenn:
- das vorhergehende übertragbare Drehmoment (TcPrev) gleich Null ist oder
- sich das Fahrzeug in der Brems- oder Beschleunigungsphase befindet oder
- das Getriebesystem in einen Antriebsmodus mit zwei Antriebsrädern übergeht oder darin ist.

4. Verfahren zum Steuern nach einem der vorhergehenden Ansprüche, **dadurch gekennzeichnet, dass** untere und/oder obere Grenzen des Drehmoments, das durch die Kupplung übertragbar ist, erzeugt werden und dass das Signal zum Steuern des Drehmoments, das durch die Kupplung übertragbar ist, mit dieser Grenze oder diese Grenzen gesättigt wird.

5. Verfahren zum Steuern nach einem der vorhergehenden Ansprüche, **dadurch gekennzeichnet, dass** ein Wert des Permanentschlupfs, der während einer ersten Fahrphase des Fahrzeugs gemessen oder geschätzt wird, in einem Speicher aufgezeichnet wird, und dass dieser Wert des Schlupfes in einer anderen Fahrphase des Fahrzeugs nach der ersten Fahrphase des Fahrzeugs verwendet wird.

6. Verfahren zum Betreiben eines Getriebesystems (18) eines Kraftfahrzeugs, wobei das System eine erste Achse (17), die standardmäßig angetrieben wird, und eine zweite Achse (19) aufweist, die optional entsprechend dem Zustand eines Mittels (11) zum mechanischen Koppeln der ersten und der zweiten Achse angetrieben wird, **dadurch gekennzeichnet, dass** es eine Phase zum Umsetzen des Verfahrens zum Steuern nach einem der vorhergehenden Ansprüche aufweist.

7. Computerlesbares Mittel zur Datenaufzeichnung, auf dem ein Computerprogramm aufgezeichnet ist, das Computerprogrammcodemittel zum Ausführen der Schritte des Verfahrens nach einem der vorhergehenden Ansprüche aufweist.

8. System (12) zum Steuern des Zustands eines Mittels (11) zum mechanischen Koppeln der ersten (17) und der zweiten (19) Achse eines Getriebesystems (18) eines Kraftfahrzeugs (10), wobei die erste Achse standardmäßig angetrieben wird und wobei die zweite Achse optional je nach Zustand des Mittels zum Koppeln angetrieben wird, **dadurch gekennzeichnet, dass** es Hardware- und/oder Softwaremittel zum Umsetzen des Verfahrens nach einem der Ansprüche 1 bis 6 aufweist.

9. Kraftfahrzeug (10), umfassend ein System (12) zum Steuern nach Anspruch 8.

10. Computerprogramm, das ein Computerprogrammcodemittel aufweist, das für das Ausführen der Schritte des Verfahrens nach einem der Ansprüche 1 bis 6 geeignet ist, wenn das Programm auf einem Computer läuft.

## Claims

1. Method for controlling a means (11) for mechanically coupling the first (17) and second (19) axles of a transmission system (18) of a motor vehicle (10), the first axle being driven by default and the second axle being optionally driven according to the state of the coupling means, **characterized in that** it comprises
- a step of continuously calculating the slip,
- a step of continuously calculating the slip set point for the slip between the first and the second axle; said slip set point is equal to:
• a slip (G0) measured and corrected by the constant slip created by a difference in rolling radius, from which are subtracted:
• a slip (GV) corrected by the slip created by the turning radius,
• and a slip obtained from two mappings corresponding to the 4 x 4 "OffRoad" mode and to the "Automatic" mode of the vehicle as a function of the vehicle speed,
- a step of controlling, notably by proportional-integral control, the slip between the first and second axles at the set point value, the control being implemented by causing a modification of the torque (Tc) transmissible by the coupler according to the difference between the calculated slip and the slip set point.

2. Control method according to Claim 1, **characterized in that** at least one of the following signals is used to determine the slip set point:
- an engine start signal,
- a signal indicating the turning radius or the steering wheel angle or the lateral acceleration,
- a wheel rotation speed signal,
- a vehicle speed signal,
- an engine speed signal,
- an engine torque signal,
- an accelerator pedal position signal,
- a signal indicating the torque applied to the coupler,
- a signal indicating the thermal state of the coupler,
- a logic signal indicating the activation of the brake pedal or the parking brake lever,
- an ABS or ESP control logic signal.

3. Control method according to either of the preceding claims, **characterized in that** the transmissible torque level is reinitialized to a given value, notably zero, when:
- the preceding transmissible torque (TcPrev) is zero, or
- the vehicle is in the braking or acceleration phase, or
- the transmission system is switching to, or is already in, a two-wheel drive transmission mode.

4. Control method according to any of the preceding claims, **characterized in that** lower and/or upper limits of the torque transmissible by the coupler are generated, and **in that** the signal for controlling the torque transmissible by the coupler is saturated with this limit or these limits.

5. Control method according to any of the preceding claims, **characterized in that** a constant slip value measured or estimated in a first driving phase of the vehicle is recorded in a memory, and this slip value can be used in another driving phase of the vehicle following the first driving phase of the vehicle.

6. Operating method of a transmission system (18) of a motor vehicle, the system comprising a first axle (17) driven by default and a second axle (19) which is optionally driven according to the state of a means (11) for mechanically coupling the first and second axles, **characterized in that** it comprises a phase of implementing the control method according to any of the preceding claims.

7. Data medium which is readable by a computer on which is recorded a computer program, comprising computer programming code means for implementing the steps of the method according to any of the preceding claims.

8. System (12) for controlling the state of a means (11) for mechanically coupling the first (17) and second (19) axles of a transmission system (18) of a motor vehicle (10), the first axle being driven by default and the second axle being optionally driven according to the state of the coupling means, **characterized in that** it comprises hardware and/or software means for implementing the method according to any of Claims 1 to 6.

9. Motor vehicle (10) comprising a control system (12) according to Claim 8.

10. Computer program comprising a computer programming code means adapted to implement the steps of the method according to any of Claims 1 to 6, when the program is run on a computer.
